# EUROPEAN PATENT APPLICATION

(11) **EP 2 573 947 A1**
(43) Date of publication of application: **27.03.2013**
(21) Application number: 11306167.5
(22) Date of filing: 16.09.2011
(51) Int. Cl.: H04B 3/54, H04L 12/28, H04L 12/70, H04W 72/12, H04W 88/06

(54) **Method and apparatus for exchanging data signals over a plurality of domains in a home network**

(71) Applicant: Alcatel Lucent, 75007 Paris (FR)
(72) Inventor: Gacanin, Haris, 2600 Antwerp (BE)
(74) Representative: Beck, Michaël Andries T

(57) **Abstract**

A method for receiving data signals transmitted over a plurality of domains in a network, said apparatus comprising receiving a first data signal at a first physical interface connected to a first domain from among said plurality of domains; receiving a second data signal at a second physical interface connected to a second domain from among said plurality of domains; combining said first data signal and said second data signal to produce a combined signal; and extracting transmitted data from said combined signal; wherein said first data signal and said second data signal are instances of a common original data signal, transmitted over said first domain and said second domain respectively, and having undergone physical signal degradation associated with said first domain and said second domain respectively.

## Description

### Field of the Invention

The present invention pertains to improved communication in networks comprising multiple domains, in particular in (home) networks according to the G.hn standards family comprising domains using different physical media.

### Background

The "G.hn" standards family of the International Telecommunication Union (ITU) (i.e., ITU-T Recommendations G.996x) was defined to enable the in-house broadband data communication required by high data rate (i.e., broadband) applications. In G.hn, different domains are available for the in-house network access over different media, in particular copper twisted-pairs as traditionally used for telephony, coaxial lines as traditionally used for transmitting television signals, power line cables, and wireless.

The available network resources and the achievable data rates are limited by the characteristics of the medium and the structure of the network. It is therefore challenging to obtain decent data rates over these media, most of which were not originally designed to carry high-speed digital data transmissions.

### Summary

Accordingly, it is an object of embodiments of the present invention to obtain higher data rates between certain nodes in a multi-domain network.

According to a first aspect of the present invention, there is provided a method for receiving data signals transmitted over a plurality of domains in a network, the apparatus comprising: receiving a first data signal at a first physical interface connected to a first domain from among said plurality of domains; receiving a second data signal at a second physical interface connected to a second domain from among said plurality of domains; combining said first data signal and said second data signal to produce a combined signal; and extracting transmitted data from said combined signal; wherein said first data signal and said second data signal are instances of a common original data signal, transmitted over said first domain and said second domain respectively, and having undergone physical signal degradation associated with said first domain and said second domain respectively.

It is an advantage of the present invention that an improved version of the data signal can be produced at the receiver side by recombining independently received copies of a common original data signal. The invention thus takes advantage of multiple available transmission paths between end points in a multi-domain network.

In an embodiment, the method according to the present invention further comprises receiving said common original data signal transmitted over said first domain at a first domain manager as a first intermediate signal; retransmitting said first intermediate signal from said first domain manager; and receiving said retransmitted common original data signal at said first interface as said first data signal.

In an embodiment, the method according to the present invention further comprises receiving said common original data signal transmitted over said second domain at a second domain manager as a second intermediate signal; retransmitting said second intermediate signal from said second domain manager; and receiving said retransmitted second intermediate signal at said second interface as said second data signal.

According to an aspect of the present invention, there is provided a method for transmitting data signals over a plurality of domains in a network, said method comprising at a network node: receiving data for transmission over said network at a service interface; producing a data signal representative of said data; transmitting a first instance of said data signal over a first physical interface, connected to a first domain from among said plurality of domains; and transmitting a second instance of said data signal over a second physical interface, connected to a second domain from among said plurality of domains.

In an embodiment of the method according to the present invention, said first instance and said second instance are shifted relative to each other in the frequency domain.

In an embodiment, the method according to the present invention further comprises selecting said first domain and said second domain from among said plurality of domains on the basis of one or more of a priority list and transmission queue status.

According to an aspect of the present invention, there is provided an apparatus for receiving data signals over a plurality of domains in a network, said apparatus comprising: a multiplexer having a service interface and a lower-layer interface, said service interface being adapted to present data received over said network; a first physical interface, operatively connected to said lower-layer interface, said first physical interface being adapted to receive data signals over a first domain from among said plurality of domains; a second physical interface, operatively connected to said lower-layer interface, said second physical interface being adapted to receive data signals over a second domain from among said plurality of domains; wherein said multiplexer is adapted to combine respective instances of a physical layer signal received from said first physical interface and said second physical interface, and to decode said data from said combined instances.

In an embodiment of the apparatus according to the present invention, said network is a G.hn network, and said plurality of domains are taken from the set of a coaxial cable domain, a twisted-pair domain, and a power-line communication domain.

In an embodiment of the apparatus according to the present invention, said instances are corresponding versions of one or more OFDM modulation symbols.

In an embodiment of the apparatus according to the present invention, said corresponding versions are shifted relative to each other in the frequency domain.

According to an aspect of the present invention, there is provided an apparatus for transmitting data signals over a plurality of domains in a network, said apparatus comprising: a demultiplexer having a service interface and a lower-layer interface, said service interface being adapted to receive data for transmission over said network; a first physical interface, operatively connected to said lower-layer interface, said first physical interface being adapted to transmit data signals over a first domain from among said plurality of domains; a second physical interface, operatively connected to said lower-layer interface, said second physical interface being adapted to transmit data signals over a second domain from among said plurality of domains; wherein said demultiplexer is adapted to provide instances of a physical layer signal to said first physical interface and said second physical interface, said physical layer signal representing said data.

In an embodiment of the apparatus according to the present invention, said network is a G.hn network, and wherein said plurality of domains are taken from the set of a coaxial cable domain, a twisted-pair domain, and a power-line communication domain.

In an embodiment of the apparatus according to the present invention, said instances are corresponding versions of one or more OFDM modulation symbols.

In an embodiment of the apparatus according to the present invention, said corresponding versions are shifted relative to each other in the frequency domain.

The advantages of the methods for transmitting information according to the present invention, and of the various apparatus according to the invention, correspond *mutatis mutandis* to those of the method for receiving information according to the present invention.

### Brief Description of the Figures

Some embodiments of apparatus and/or methods in accordance with embodiments of the present invention are now described, by way of example only, and with reference to the accompanying drawings, in which:
Figure 1 presents a flow chart of a method according to an embodiment of the present invention;
Figure 2 presents a flow chart of a method according to another embodiment of the present invention;
Figure 3 provides a block diagram of an apparatus according to an embodiment of the present invention;
Figure 4 provides a block diagram of an apparatus according to another embodiment of the present invention;
Figures 5 and 6 illustrate an exemplary multi-domain network according to the G.hn standards family, presenting loops which may be exploited by embodiments of the present invention; and
Figure 7 presents a schematic illustrating the relationship between various functions carried out in the context of the present invention.

The same reference numerals have been used throughout the figures to designate the same elements.

### Detailed Description of Embodiments

Power line and wireless channels can be characterized as multipath propagation environments. Upon the multipath signal transmission, different signal copies undergo different attenuation, distortion, delays and phase shifts. Due to this effect, the overall system performance (e.g., BER, throughput, etc.) may be severely degraded, because the channel response is a superposition of the different copies of the signals with their different channel-induced modifications, leading to a decrease in signal-to-noise ratio.

Diversity techniques can be used to improve system performance (e.g., BER, throughput) in multipath channels. The idea behind diversity is that it is possible to combine several copies of the transmitted signal, which will be independently affected by the particular channel they experienced, and which together provide enough information to reconstruct the transmitted symbol. This will increase the overall received power and make the correct decision on the transmitted symbol.

Currently, multiple-input multiple-output (MIMO) transmission is used in certain communication systems, including wireless and vectored digital subscriber lines (DSL). In the context of G.hn, MIMO may be applied between two devices linked by a power line communication (PLC) domain, to achieve spatial multiplexing or diversity within the power line domain in G.hn. Moreover, MIMO antenna diversity is also available for wireless domains operating according to certain wireless LAN standards.

The implementation of diversity solutions within individual G.hn domains involves hardware changes to the devices, such as an increase in the number of antennas, the number of PHY interfaces, etc. This is both impractical and expensive to the vendors and the end users.

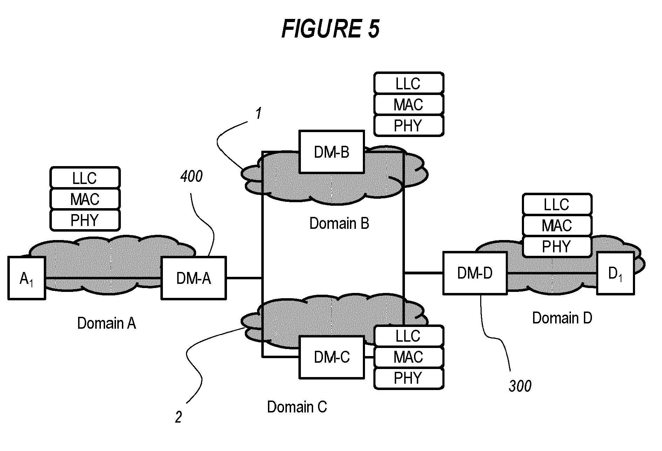

Furthermore, in the case of a multi-domain scenario such as the one illustrated in Figure 5, the initiation of a communication session between two devices is not straightforward to implement. The problem is worsened by the fact that different domains can use different media types (e.g., copper twisted-pairs, coax, power line cables, wireless). Consequently, straightforward transitions/interfaces between different mediums are not feasible when MIMO is implemented. For example, a power line medium has 3 available degrees of freedom (3 conductors) for MIMO, while the coax medium has only 1 level of freedom (1 central conductor).

Embodiments of the present invention enable multi-domain (spatial) diversity for broadband home network data transmission by exploiting the physical characteristics of the home network environment. According to the insight of the inventor, copies of the transmitted signal are transmitted over multiple independent media (i.e., multiple domains) and combined at the receiver end to increase the overall received power and make the correct decision on the transmitted symbol.

Combining of the analog signals is possible at the PHY layer or at the packet level (similar to packet combining in Hybrid ARQ). Without loss of generality, the invention will be described here with regard to recombination at the physical level.

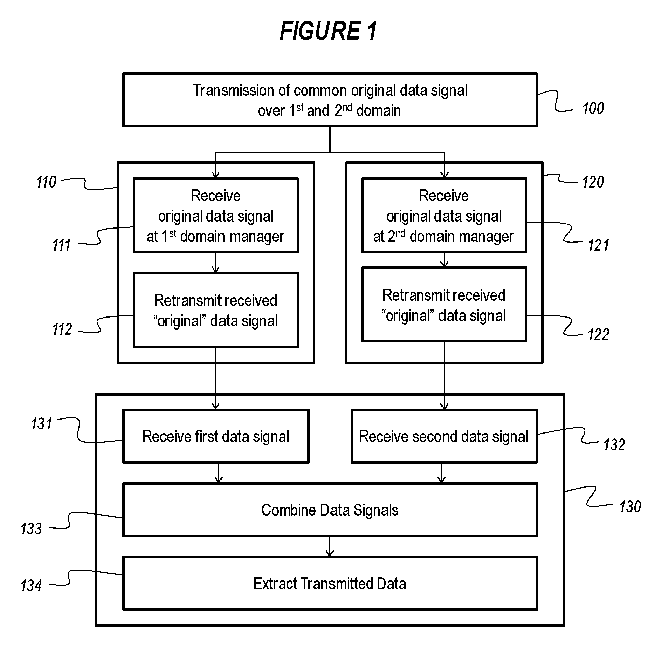

Figure 1 illustrates an exemplary embodiment of a method for receiving data signals transmitted over plurality of domains in a network such as a G.hn network. Without loss of generality this embodiment and the further embodiments will be described with reference to two domains generally designated by reference numerals 1 and 2, but the skilled person will understand that the principles of the invention also hold for greater numbers of domains. Although the steps shown in Figure 1 and subsequent Figures are illustrated and described in a particular order, this is done only for exemplary purposes and is not intended to limit the invention to that particular order unless where it is clear from the description that a particular step cannot take place before another step has been completed or vice versa.

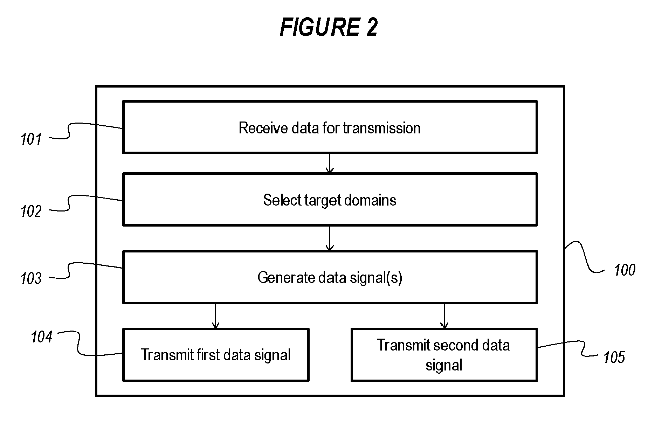

Figure 1 shows a preparatory step **100** which consists of the transmission of common original data signals over the first and the second domain, and which will be explained in more detail with reference to Figure 2. The further steps illustrated in Figure 1 assume that the original data signal has been transmitted over the first and second domain **1, 2** and is available for reception at a first and second receiver interface.

The embodiment of the method according to the invention as illustrated in Figure 1 further assumes that the transmission of the original data signal over the first and second domain **1**, **2** takes place via a first and second domain manager. Block **110** illustrates how the original data signal is received at the first domain manager at step **111** and retransmitted after an optional digital regeneration of the signal by the first domain manager at step **112.** In the substantially simultaneous block **120** another copy of the original data signal is received at the second domain manager in step **121** and retransmitted after optional digital regeneration of the signal in step **122**. The skilled person will understand that blocks **110** and **120** are optional and that the invention would operate according to the same general principles if transmission were to take place immediately from the common data signal generator **400** to the joint receiver **300**.

The operation of the receiver **300** will now be described in connection with block **130**. Block **130** illustrates how the first data signal, optionally regenerated by the first domain manager, is received at a common receiver in step **131**, and how the second data signal, optionally regenerated by the second domain manager, is received by the common receiver at step **132**. Both received data signals, which will have undergone different respective degradations by the respective domains through which they have travelled, are then combined at step **133** in order to reconstruct an optimal copy of the originally transmitted data signal. The recombination may take place according to MIMO techniques that are known in the art.

The transmitted data is extracted from this combined signal at step **134**. The combination of data signals received over physically distinct paths or domains has the technical effect that impairments of either one of the domains can be compensated by means of the other received copy of the signal and vice versa. In this way, transmission path diversity is exploited to obtain a better signal quality at the joint receiver, i.e. a better signal to noise ratio which results in lower error rates and/or higher bit rates.

Figure 2 illustrates the complementary embodiment of the present invention which consists of a method to transmit data signals over plurality of domains in a network such as a G.hn network. The steps illustrated in Figure 2 correspond to the abstract block **100** already mentioned in connection with Figure 1.

In a first step **101**, data to be transmitted over the network is received by the transmitter **400** via any suitable service interface such as a logical link control (LLC) service interface or any other hardware or software entry point into the protocol stack. The transmitter **400** selects the target domains **1**, **2** for the transmission of the received data according to suitable criteria, which may include the instantaneous load on the various domains, the priority of the data to be transmitted and any information regarding the network topology. The skilled person will understand that only those domains that actually provide a pathway between the transmitter **400** and the intended receiver **300** should be selected for the application of the transmission method according to the present invention.

At the third step **103**, the transmitter **400** generates the data signals corresponding to the received data for transmission in accordance with the physical requirements on the selected target domains **1**, **2**. Although it is assumed that the various domains generally employ the same modulation techniques for the transmission of data, it will be understood that this is not a strict prerequisite and that various degrees of deviation from this assumption may occur without disrupting the operation of the inventive concept. In particular, the data signal generated for one domain may be a frequency-shifted version of the data signal generated for another domain. At the transmission steps **104** and **105**, the generated data signals are transmitted over the respective selected target domains **1**, **2**.

Although known MIMO techniques may generally be applied to the present invention, certain additional aspects are specific to embodiments of the present invention.

In embodiments of the present invention, participating domains may be selected on the basis of the quality of the medium of each of the respective domains. Such a selection requires an assessment of the quality of these media, which preferably takes place in the course of other (non-MIMO) communications conducted over these domains, or alternatively in a separate medium quality assessment step. In embodiments of the present invention, communication channels, made up of one or more domains that are being combined for MIMO communication according to the invention, are classified, compared with a threshold based on a particular desired quality of service level, and selectively activated on the basis of that comparison. The threshold may pertain to a desired bitrate. For example, the threshold may pertain to the bitrate that is required to accommodate the transmission of an HDTV signal, and a system according to an embodiment of the invention may be configured to activate only channels that meet this target bitrate.

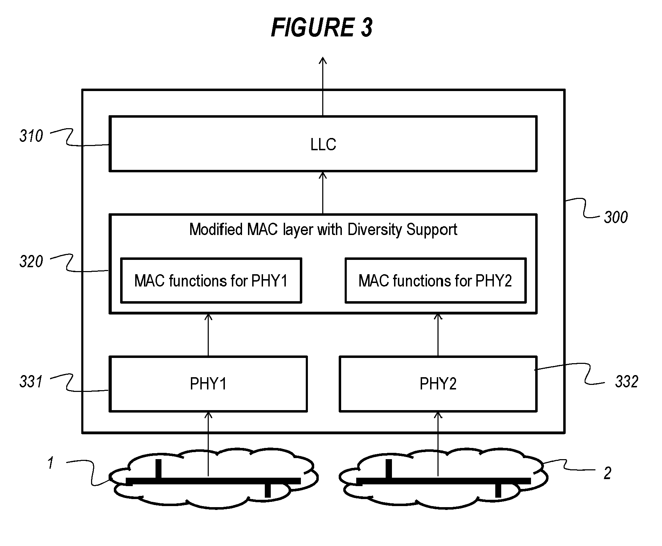

Figure 3 schematically illustrates an apparatus **300** for receiving data signals over a plurality of domains in a network, such as a G.hn network. The apparatus **300** comprises a multiplexer **320** having a service interface (illustrated here as the arrow between multiplexer **320** and the LLC sublayer **310**), which is adapted to present the data received over the network to the higher layers. The multiplexer **320** further comprises a lower layer interface, i.e. an interface to connect to one or more physical layer entities that are designed to interact with interactive physical media (the lower layer interface is schematically represented by the arrows interconnecting respective layer entities **331** and **332** with the multiplexer **320**).

The various physical layer entities **331, 332** (only two of them are illustrated without loss of generality) are designed to be connected with respective physical domains **1** and **2** according to any of the various physical layer technologies listed above.

The multiplexer **320** is illustrated here as a modified media access control (MAC) layer with diversity support encompassing the MAC functions required for the respective physical layer entities **331** and **332.** The skilled person will understand that this particular architecture with boundaries between the various functions provided at the MAC service interface and at the physical layer interface was chosen just for illustrative purposes and does not limit the scope of the invention to implementations following this particular division of functions.

The multiplexer **320** is adapted to combine the respective instances of a received physical layer signal received at the first physical layer entity **331** and the second physical layer entity **332** respectively, and to decode received data from the combined instances, for instance by using conventional MIMO techniques as known in the art.

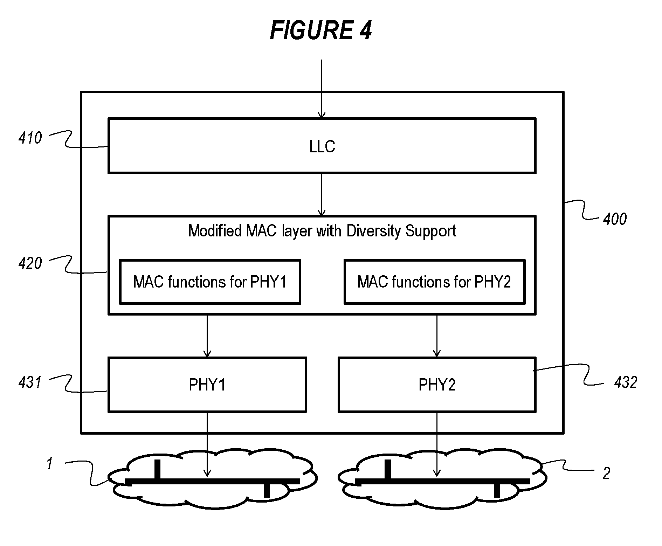

Figure 4 illustrates the complementary apparatus for transmitting data signals over a plurality of domains in a network such as a G.hn network. The apparatus **400** comprises a demultiplexer **420** having a service interface and a lower layer interface. The service interface is schematically represented as the arrow interconnecting the logical link control sublayer **410** and demultiplexer **420** while the lower layer interface is schematically represented as the respective arrows interconnecting the demultiplexer **420** with the physical layer entities **431** and **432.**

The service interface is adapted to receive data for transmission over said network from an LLC client such as an Internet Protocol (IP) layer or another network layer instance (not shown). Physical layer entities **431** and **432,** operatively connected to respective domains **1** and **2**, and operate in an analogous way as described for Figure 3. They are configured to transmit data received from the demultiplexer **420** over their respective associated domain. The demultiplexer **420** is adapted to provide instances of a physical layer signal to the physical layer entities **431** and **432** wherein the physical layer signal represents the data provided by the LLC sublayer **410.**

The skilled person will understand that the transmitter of Figure 4 and the received of Figure 3 are functional descriptions of various roles that may be performed by the same physical apparatus. Clearly, in a practical embodiment, an apparatus will comprise a single LLC layer **310**/**410**, logic for multiplexing and demultiplexing physical layer signals **320**/**420** and a set of physical layer entities **331**/**431**, **332**/**432**, operatively connected to the respective available domains **1**, **2**, Each performing the various functions described above in relation to transmitted data and received data.

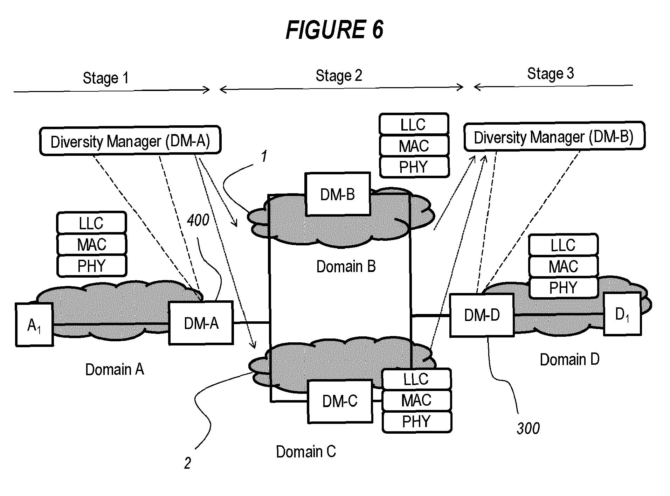

Figures 5 and 6 illustrate an exemplary network architecture in which the methods and apparatus previously described may be deployed. The illustrated deployment assumes the presence of multi-port device functionality that can be exploited to enable efficient multi-domain diversity. Without loss of generality, two devices from different domains (A₁ and D₁, from domains A and D respectively) establish the communication session. Note that different domains can use the same or different mediums (e.g., copper twisted-pairs, coax, power line cables, wireless). The transmitter **400** of Figure 4 may be assumed to be present at domain manager DM-A and the receiver **300** of Figure 3 may be assumed to be present at domain manager DM-D, wherein data is transmitted between DM-A and DM-D over selected target domains B and C in such a way that DM-D receives separate copies of the same data signal from respective domains B and C via the respective domain managers DM-B and DM-C. The receiver DM-D will then be capable of reconstructing a combined signal from which it will be able to extract the data transmitted by DM-A thereby compensating for any impairments introduced in either domain by means of the other copy of a signal.

With respect to the role of the division of functions between the end points A₁ and D₁, and the intervening domain managers DM-A, DM-B, DM-C, and DM-D, several alternative models are within the scope of the present invention.

In a first model, the MIMO transmission is terminated (i.e., the multiple signal copies are recombined) at the receiving domain manager DM-D, while the respective broadcast signals are pre-processed (i.e. digitally regenerated) by the domain managers DM-B and DM-C in their respective domains to cope with the negative effects of the corresponding media. In this case the receiving device D₁ does not require any processing, as it receives a substantially clean copy of the signal. This case is a combination of joint MIMO processing at the DM transceivers. It can advantageously be applied to G.hn networks, because we can rely on the assumption that all G.hn DM devices are permanently plugged into the electricity grid. Hence, the power consumption that comes with the added computational complexity is not an issue.

In a second model, the entire processing (removal of MIMO channels as well as removal of corresponding medium) is done at the device D₁. Thus, the receiving DM-D is only used as a relay. Channel information is provided to the device D₁ before the processing is carried out. This model comes with higher complexity at the receiving device D₁.

In a third model, the removal of MIMO channels is done at receiving domain manager DM-D, which then broadcasts the reconstructed signal into the domain D of the targeted receiver device D₁. The device D₁ only removes the negative effect of its corresponding medium, i.e. the medium of its domain D. This case provides optimum balance between the processing complexity and delay at the device D₁ and DM-D.

The skilled person will understand that a minimum of interaction will be required between the demultiplexer of DM-A and the multiplexer of DM-D in order to coordinate the diversity based transmission according to the present invention.

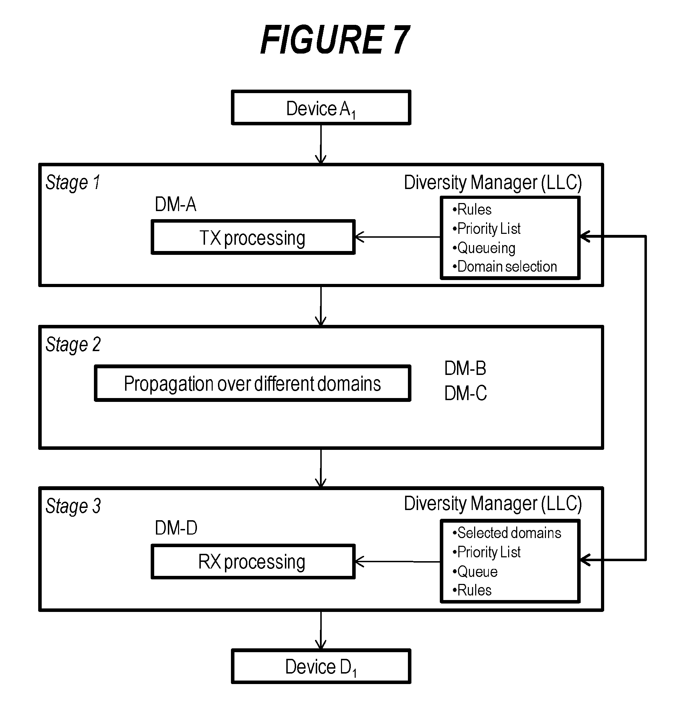

DM-A and DM-D are assumed to comprise a "diversity manager" for that purpose, each of which communicates with its counterpart using conventional single domain communication. The diversity manager is a logical function, which enables the logical 'connection' between different DMs, allowing the sender and the receiver in the MIMO transmission to coordinate their respective actions. The communication between the domain managers is schematically illustrated in Figure 7 as the arrow interconnecting stage 1 with stage 3 where joint communication about rules, priority lists, queuing and domain selection is exchanged between the diversity managers of the respective end points. Without loss of generality, the diversity manager is assumed to be present in the logical link control (LLC) sublayer **310**, **410** of the respective end points.

Hence, unlike traditional MIMO systems, where the end points have no knowledge of system/network parameters, the processing algorithm used in embodiments of the present invention take into consideration different home network parameters such as domain ID, device ID, queries, QoS, service/system-wise rules, etc. The MIMO processing requires coordination between the end points, preferably under the direction of a "global master", which may be one of the diversity managers under consideration.

An exemplary procedure flow is shown in Figure 7. In this example the device A₁ from domain A transmits its signal to the device D₁ from domain D or vice versa. The proposed concept is divided into three stages:
[Stage 1] In the first stage, the diversity manager of the domain master A (DM-A) sends the signal from device A1 to different domains B and C, selected on the basis of input parameters (i.e., priority list, rules, queue and domain selection criteria) among all available domains (no other domains are shown in Figures 5 and 6). Communication takes place using existing multi-port functionality or the logical link control (LLC) function.
[Stage 2] Then, the signal from A₁ is propagated over the selected domains.
[Stage 3] At the receiver end, the diversity manager of the domain master D (DM-D) executes the signal combining step on the basis of the parameters (i.e., priority list, rules, queue, and domain selection criteria) from the 'feedback' channel to exploit the multi-domain diversity. Thus, substantially the same copies of the transmitted signal are sent over multiple independent media (i.e., multiple domains), to be recombined at the receiver end in order to increase the overall received power. Combining of the analog signals is possible at the PHY layer or at the packet level (similar to packet combining in Hybrid ARQ).

Note that the proposed multi-domain diversity concept does not require any hardware modification at the end user home network devices (A₁, D₁).

The functions of the various elements shown in the FIGS., including any functional blocks labeled as "processors", "sublayers", or "entities" may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for receiving data signals transmitted over a plurality of domains in a network, said apparatus comprising:
- receiving a first data signal at a first physical interface connected to a first domain from among said plurality of domains;
- receiving a second data signal at a second physical interface connected to a second domain from among said plurality of domains;
- combining said first data signal and said second data signal to produce a combined signal; and
- extracting transmitted data from said combined signal; wherein said first data signal and said second data signal are instances of a common original data signal, transmitted over said first domain and said second domain respectively, and having undergone physical signal degradation associated with said first domain and said second domain respectively.

2. The method according to claim 1, further comprising:
- receiving said common original data signal transmitted over said first domain at a first domain manager as a first intermediate signal;
- retransmitting said first intermediate signal from said first domain manager; and
- receiving said retransmitted common original data signal at said first interface as said first data signal.

3. The method according to claim 1 or 2, further comprising:
- receiving said common original data signal transmitted over said second domain at a second domain manager as a second intermediate signal;
- retransmitting said second intermediate signal from said second domain manager; and
- receiving said retransmitted second intermediate signal at said second interface as said second data signal.

4. A method for transmitting data signals over a plurality of domains in a network, said method comprising at a network node:
- receiving data for transmission over said network at a service interface;
- producing a data signal representative of said data;
- transmitting a first instance of said data signal over a first physical interface, connected to a first domain from among said plurality of domains; and
- transmitting a second instance of said data signal over a second physical interface, connected to a second domain from among said plurality of domains.

5. The method according to claim 4, wherein said first instance and said second instance are shifted relative to each other in the frequency domain.

6. The method according to claim 4 or claim 5, further comprising selecting said first domain and said second domain from among said plurality of domains on the basis of one or more of a priority list and transmission queue status.

7. An apparatus for receiving data signals over a plurality of domains in a network, said apparatus comprising:
- a multiplexer having a service interface and a lower-layer interface, said service interface being adapted to present data received over said network;
- a first physical interface, operatively connected to said lower-layer interface, said first physical interface being adapted to receive data signals over a first domain from among said plurality of domains;
- a second physical interface, operatively connected to said lower-layer interface, said second physical interface being adapted to receive data signals over a second domain from among said plurality of domains;
wherein said multiplexer is adapted to combine respective instances of a physical layer signal received from said first physical interface and said second physical interface, and to decode said data from said combined instances..

8. The apparatus according to claim 7, wherein said network is a G.hn network, and wherein said plurality of domains are taken from the set of a coaxial cable domain, a twisted-pair domain, and a power-line communication domain.

9. The apparatus of claim 7 or claim 8, wherein said instances are corresponding versions of one or more OFDM modulation symbols.

10. The apparatus of claim 9, wherein said corresponding versions are shifted relative to each other in the frequency domain.

11. An apparatus for transmitting data signals over a plurality of domains in a network, said apparatus comprising:
- a demultiplexer having a service interface and a lower-layer interface, said service interface being adapted to receive data for transmission over said network;
- a first physical interface, operatively connected to said lower-layer interface, said first physical interface being adapted to transmit data signals over a first domain from among said plurality of domains;
- a second physical interface, operatively connected to said lower-layer interface, said second physical interface being adapted to transmit data signals over a second domain from among said plurality of domains;
wherein said demultiplexer is adapted to provide instances of a physical layer signal to said first physical interface and said second physical interface, said physical layer signal representing said data.

12. The apparatus according to claim 1, wherein said network is a G.hn network, and wherein said plurality of domains are taken from the set of a coaxial cable domain, a twisted-pair domain, and a power-line communication domain.

13. The apparatus of any of the preceding claims, wherein said instances are corresponding versions of one or more OFDM modulation symbols.

14. The apparatus of claim 3, wherein said corresponding versions are shifted relative to each other in the frequency domain.
